# EUROPEAN PATENT APPLICATION

(11) **EP 1 150 542 A1**
(43) Date of publication of application: **31.10.2001**
(21) Application number: 00966516.7
(22) Date of filing: 16.10.2000
(51) Int. Cl.: H04R 3/00, H04R 23/00, H04N 5/225

(54) **VIDEO CAMERA WITH MICROPHONE**

(30) Priority: 15.10.1999 JP 29421899
(71) Applicant: Phone-Or Limited, Or-Yehudah 60252 (IL); Paritsky, Alxander, Or-Yehuda 60252 (IL)
(72) Inventor: KOTS, Alexander, Or-Yehuda, 60252 (IL); KOBAYASHI, Okihiro, Kenwood Corporation, Tokyo 150-0043 (JP); MIYAHARA, Nobuhiro, Kenwood Corporation, Tokyo 150-0043 (JP); SATO, Hachiro, Kenwood Corporation, Tokyo 150-0043 (JP)
(74) Representative: Pratt, David Martin
(86) International application number: JP0007170
(87) International publication number: WO0128285

(57) **Abstract**

A video camera with a microphone having controllable directivity characteristics to an object in synchronism with focusing of the video camera to the object. The microphone is an optical microphone (300) comprising a diaphragm (2) vibrating with sound pressure, a light source (3) for irradiating the diaphragm (2) with a light beam, a photodetector (5) for receiving part of the light beam reflected from the diaphragm (2) and outputting a signal corresponding to the vibration of the diaphragm, a circuit (13) for driving the light source (3) by supplying a predetermined current, and a negative feedback circuit (100) for supplying a part of the signal outputted from the photodetector (5) to the light source driving circuit (13) as a negative feedback signal. The directivity characteristics of the optical microphone (300) are controlled by varying the magnitude of the negative feedback signal with a zooming signal indicative of the zooming amount of the video camera with respect to the object.

## Description

### Technical Field

This invention relates to a video camera with a microphone, and especially for a video camera with a microphone that an aural focusing synchronized with focusing of an image may be performed.

### Description of the Related Art

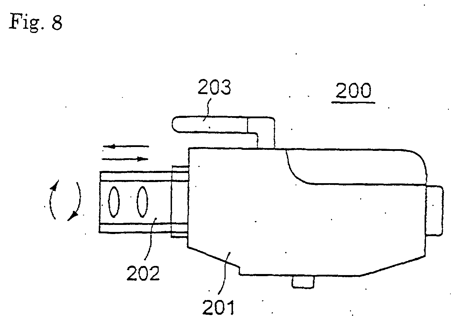

Figure 8 shows an outline configuration of a video camera 200 with a conventional microphone. A camera body 201 is equipped with a lens 202 to input image of the subject, and a microphone 203 to input voice from the subject. A stereophonic type microphone or a monaural type microphone was used as the microphone 203 mounted on such a video camera. A microphone mounted on such a video camera was toggled either in a single directivity or in an undirectivity to prevent the noise by a wind pressure in the open air, or to meet the conditions of the subject.

On the other hand, a video camera focuses on the subject by accommodating a lens 202 corresponding to the distance of the subject, and it is manipulated to get the most suitable picture signal. And, when varifocal lens is used, an image of the subject in the far range can be got by zooming up and an image of the subject in the short distance can be get by zooming down. On the other hand, manipulation of the microphone 203 was separate from manipulation of the lens 202. Namely, the voice of the surroundings was collected with a one-point microphone or a stereophonic microphone regardless of the enlargement or reduction of the image taken by varifocal lens.

As stated above, the video camera with the conventional microphone, even if subject image was enlarged or it was reduced, the voice from the subject didn't interlock in this, but the microphone could just catch only the voice of the surroundings. Therefore, even the image was zoomed up by the camera, the voice from the subject was heard from the distance. This is because the microphone mounted on a video camera was single directivity or nondirectional microphone and a sensitivity of the microphone couldn't be toggled according to the zooming of the image.

There was no video camera with a microphone that catch a voice as it was from the short distance when the image was zoomed and that catch a voice as it was from the far range when the image was reduced. It is an object of this invention to solve the above-mentioned problem, and to provide a video camera with a microphone that may zoom a voice according to zooming of an image.

### SUMMARY OF THE INVENTION

The video camera with a microphone of this invention comprises a microphone that may control directional characteristics to focus on the subject synchronizing to the focusing on the subject of the video camera, wherein the microphone is an optical microphone comprising:
a diaphragm which oscillates by the sound pressure;
a light source which irradiates a light beam in the above diaphragm;
a photodetector which receives a reflection light of the light beam irradiated on the above diaphragm and outputs the signal which copes with the oscillation of the above diaphragm;
a light source drive circuit that drives to supply predetermined electric current to the light source; and
a negative feedback circuit that supplies a part of the signal outputted from the photodetector to the light source drive circuit as a negative feedback signal;
and wherein the directional characteristics of the optical microphone is controlled by changing the volume of the negative feedback signal by the zooming signal which shows the amount of zooming of the video camera to the subject.
In the video camera with a microphone of this invention, the zooming signal may be a zoom quantity gradation signal, which shows a quantity of change in zooming of the varifocal lens of the video camera.

### BRIEF DESCRIPTION OF DRAWINGS

Figure 1 shows a circuit diagram, which shows the point part configuration of the video camera with the microphone in an embodiment of this invention.
Figure 2 shows a gradation of the directivity response pattern of optical microphone element to use for this invention.
Figure 3 shows a structure of optical microphone element to use for this invention.
Figure 4 shows a structure of another optical microphone element to use for this invention.
Figure 5 shows a circuit diagram, which shows the outline configuration of optical microphone device to use for this invention.
Figure 6 shows a gradation figure of the directivity response pattern of the optical microphone element of figure 4.
Figure 7 shows a directional characteristics pattern figure of the optical microphone element used for this invention.
Figure 8 shows an outline configuration of the video camera with the conventional microphone.
   In these figures, 2 is diaphragm, 3 is light source, 5 is photodetector, 7 is sound wave, 13 is light source drive circuit, 18 is zoom quantity accommodation means, 19 is image capture element, 20 is amplifier, 21 is zoom quantity conversion circuit, 50 is optical microphone element, 60 is choice control unit, 100 is negative feedback circuit, and 300 is optical microphone.

### DESCRIPTION OF THE PREFERED EMBODIMENTS

A video camera with a microphone of this invention scales a voice taken through the microphone to change directivity in accordance with the scaling of the zoom image so that voice from the subject which is reduced in largeness of image may be heard from the distance and voice from the subject which is magnified in largeness of image may be heard from the neighborhood. Furthermore, optical microphone is used as the microphone.

First, the basic operation and configuration of the optical microphone used by this invention is explained below.

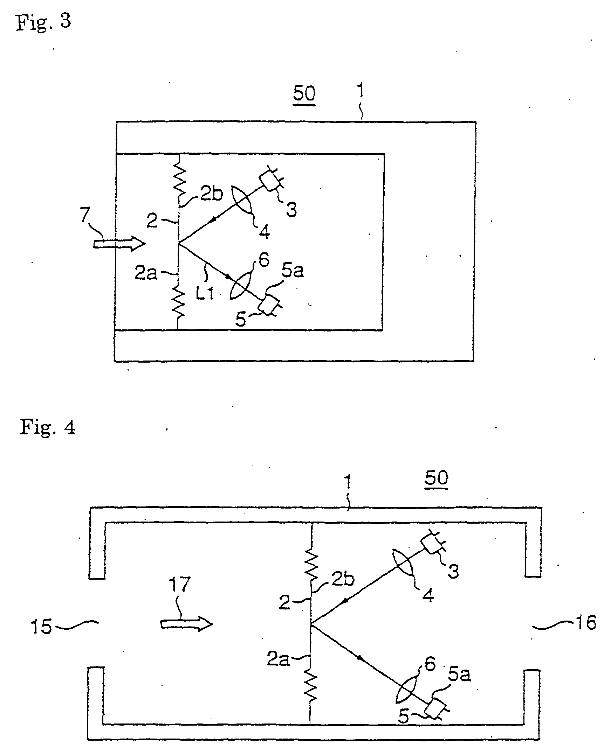

Figure 3 shows a structure of the head part of an optical microphone element 50. A diaphragm 2 which oscillates by a sound wave is provided in the microphone head 1, and a surface 2a at the side which a sound wave hits is exposed to the outside. Therefore, a sound wave 7 reaches this surface 2a, and oscillates this diaphragm 2. Inside the head 1 located in the opposite surface 2b of the diaphragm 2 against the surface 2a, a light source 3 such as LED irradiating a light beam in the surface 2b of the diaphragm 2, a lens 4 to make a light beam from this light source 3 predetermined beam shape, a photodetector 5 which receives the reflection light reflected in the surface 2b, and a lens 6 to zoom the displacement of the optical path of the reflection light caused by the oscillation of the diaphragm 2, are set up. When a sound wave 7 hits the surface 2a of the diaphragm 2 and a diaphragm 2 oscillates, the receiving position of the reflection light that enters to the receiving surface 5a of the photodetector 5 changes.

If a photodetector 5 is composed as a position sensor, an electric signal which met the oscillation of the diaphragm 2 from the irradiation location of the reflection light is taken out. This is the basic structure of the optical microphone. However, effect on a noise decrease can't be expected with the optical microphone that shows it in the figure 3 very much. This is because a diaphragm 2 also oscillates by the noise which reaches a diaphragm 2 and this is piled as a noise signal by oscillation by the usual sound wave 7.
As an optical microphone which reduces the influence of this noise and attempts effect on a noise decrease, a structure shown in figure 4 is known. In the structure shown in figure 4, the diaphragm 2, which oscillates by the sound wave 7, is provided in almost the center of the head 1. Then, on both sides of the head 1, a 1st opening 15 and a 2nd opening 16 are set up to become symmetrical location to each other. By composing it like this, a sound wave gets into the head 1 from the both openings to oscillate the diaphragm 2.

In the optical microphone element 50 shown in figure 4, when the phase and the amplitude of the sound wave from the 1st opening 15 and those of the sound wave from the 2nd opening 16 are equal, these two sound waves interfere with each other in both sides 2a and 2b of the diaphragm 2, and never oscillate the diaphragm 2. When two microphones that have equal sensitivities are arranged dose and they receive the sound wave which occurred in the far range, the two microphone elements detect the sound wave equally.

Generally, a sound wave occurs from the mouth of the person in the short distance to the microphone element. In other words, most voice occurs at the short distance from this microphone element. The voice of the person of this short distance has globular field characteristics so that it may be shown by a circular curve. As for the sound wave by the noise sound which occurs in the far range has the characteristics of the plane field. Though the sound intensity of the globular wave is about the same along that spherical surface or the envelope and changes along the radius of that glob, sound intensity of the plane wave almost becomes the same in all the plane points.

As the optical microphone element shown in figure 4 can be thought to associate two microphone element, when this was put on the far range field, the sound waves which have almost the same amplitude and phase characteristics from the 1st opening 15 and the 2nd opening 16 comes in the diaphragm 2 to interfere with each other, and those influences are decreased. On the other hand, as a sound wave from the short distance field enters from the 1st opening 15 or the 2nd opening 16 non-uniformly, a sound wave from the short distance field oscillates a diaphragm 2, and it is taken out as a signal by the photodetector 5. The structure of figure 4 can provide the optical microphone element which reduces the influence of the noise more.

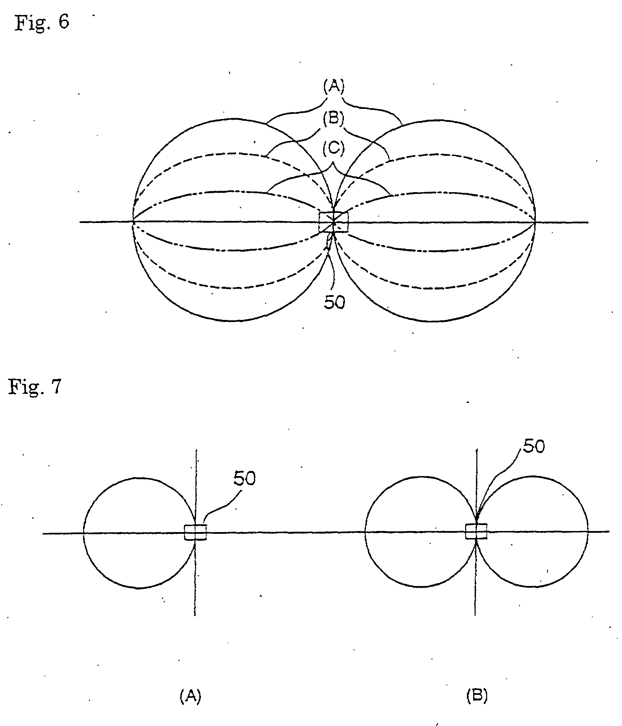

Figure 7 shows directivity response patterns of the optical microphone element shown in figure 3 and figure 4. Figure 7A shows a directivity response pattern of the optical microphone element 50 shown in figure 3. This optical microphone element 50 has an almost circular-shaped directivity response pattern, and has optimum sensitivity in the direction which is vertical to the diaphragm 2 toward the opening (the left side direction of the figure). Figure 7B shows a directivity response pattern of the optical microphone element 50 shown in figure 4. This optical microphone element 50 has almost "8" shaped directivity response pattern, and has optimum sensitivity in both directions of the openings 15 and 16.

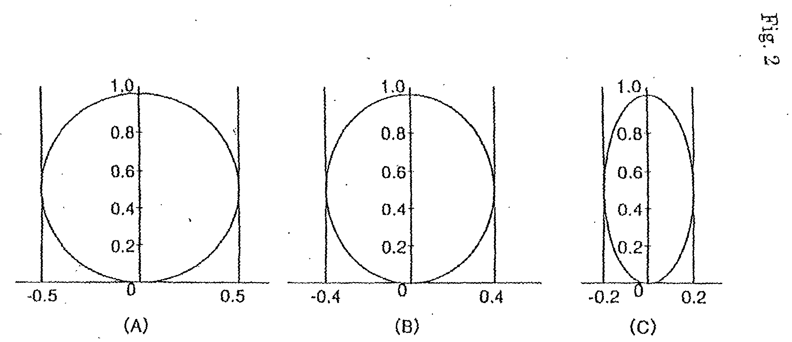

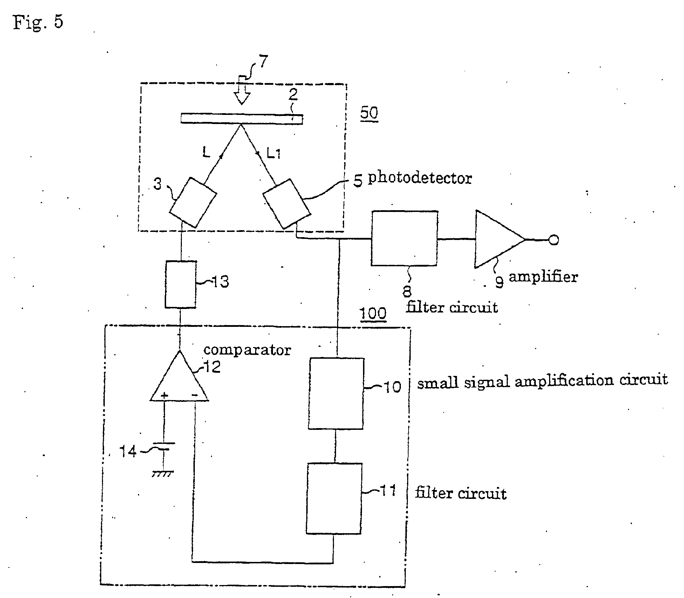

The directivity response pattern of the optical microphone element 50 shown in figure 3 and figure 4 can be stretched along the axis having optimum sensitivity as shown in figure 2 or figure 6. Also, the directivity response pattern can be narrowed along the direction which is vertical to the axis. To make the pattern of the directivity change like this, a part of the detection output from the photodetector 5 should be negatively feedbacked by using the negative feedback circuit to the light source drive circuit that drives light source 3. Figure 5 shows an outline configuration of an optical microphone device which used a feedback circuit 100 to make a beam pattern change such as figure 2 or figure 6.

Output from the photodetector 5 is taken out through the filter circuit 8, amplified by an amplifier 9, and it becomes microphone output. A filter circuit 8 is used to take out a requested signal component of the frequency range. Here, with the optical microphone device shown in figure 5, it is composed to supply a part of the output signal taken out from this photodetector 5 to the light source drive circuit 13 through the negative feedback (NFB) circuit 100 as a negative feedback signal. Light source drive circuit 13 drives this light source 3 by supplying predetermined electric current to the light source 3.

Negative feedback circuit 100 comprises a small signal amplification circuit 10, a filter circuit 11 which takes out a signal component of the requested frequency range from the output from the small signal amplification circuit 10, and a comparator 12. A norm power source 14 which provides reference voltage is connected to the non-inversion input terminal of the comparator 12. The signal taken out through the filter circuit 11 is supplied to the reverse input terminal of the comparator 12. When it is composed like this, a little output level is outputted as much as the output of the filter circuit 11 of the comparator 12 is big, and light source drive circuit 13 is actuated by this to reduce electric current supplied to the light source 3.

Only when an input signal level is less than a predetermined level, small signal amplification circuit 10 amplifies that signal, and a certain signal beyond the level is not amplified. Therefore, an output signal level doesn't change in the case the input signal level is beyond a predetermined level, and amplification degree (gain) becomes 0. When an input signal is less than a predetermined signal level, it amplifies so that amplification degree may grow big as much as a signal level is small. Furthermore, the rate of increase of the output signal toward the input signal rises as much as an input signal level is small. As an output from the photodetector 5 is in proportion to the received sound volume, the output of the small signal amplification circuit 10 is greatly amplified and outputted.

Because this output is being inputted to the reverse input terminal of the comparator 12 through the filter circuit 11, the output of the comparator 12 decreases conversely as much as small sound volume. As that result, the electric current supplied to the light source 3 is actuated so that small sound volume may make the optical output of the light source 3 decline. Id est, the sensitivity of the microphone declines as much as small sound volume. As a signal beyond the predetermined level isn't amplified, optical output isn't restricted by that signal level. Therefore the sensitivity of the microphone never declines.

When the sound which came from the axis direction which was vertical to the diaphragm and which has a volume that does not cause the sensitivity decline of the microphone is moved from the axis direction, sensitivity gradually declines along the original directivity response pattern curve. Then, when the sensitivity becomes less than a certain level, small signal amplification circuit 10 comes to have amplification degree, and the electric current control of the light source drive circuit 13 works, and the sensitivity of the microphone declines more. As this result, with the optical microphone device which has negative feedback circuit 100, the width of the directivity beam is more limited than the directivity response pattern of the sensitivity as shown in figure 2 and figure 6.

Figure 2 and Figure 6 show pattern gradations of directivity by changing the gain of negative feedback. In these figures, (A) shows the directivity response pattern when negative feedback isn't made, and almost becomes a circular directivity response pattern in this case. Next, directivity response patterns under negative feedback are shown in (B) and (C). The gain of negative feedback is small in the case of (B), and the gain of negative feedback is big in the case of (C). As shown in these figures, the gain of negative feedback is made to change by varying the amplification degree of the small signal amplification circuit 10. The directivity response pattern of the sensitivity can be stretched along the axis direction of the optimum sensitivity by this, or narrowed in the direction that is vertical to the axis. Thus, the directional characteristics of the sensitivity of the optical microphone can be changed.

The sound collector of this invention changes the directional characteristics of a selected microphone by using the optical microphone that may change the beam pattern of directivity.

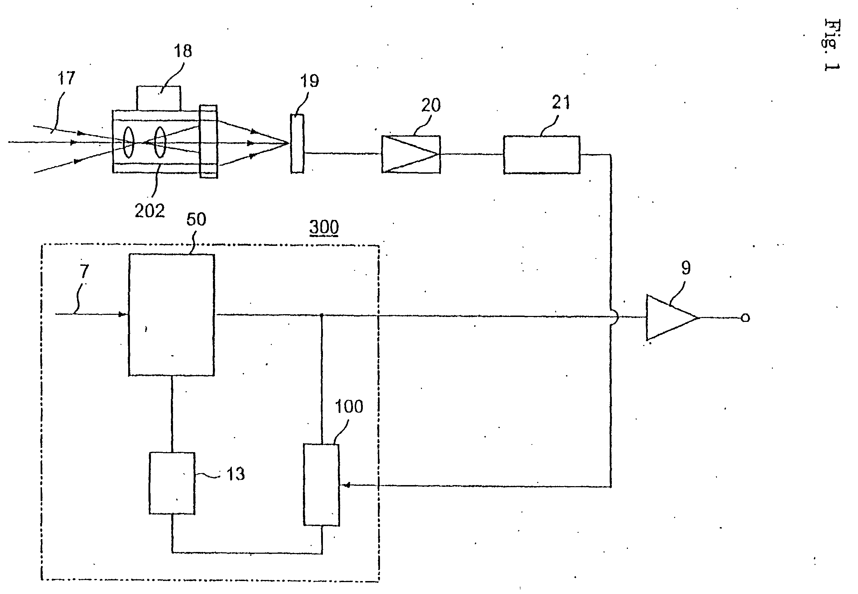

Figure 1 is a block diagram, which shows an embodiment of the video camera with a microphone by this invention. The video camera adopts an optical microphone 300 that comprises an optical microphone element 50, a light source drive circuit 13 and a negative feedback circuit 100 instead of the microphone 203 in the conventional camera shown in figure 8.

The configuration of the camera is as follows: A zoom quantity accommodation means 18 accommodates the amount of zoom of the lens 202 for inputting image 17. A signal from the zoom quantity accommodation means 18 is taken out through an image detection element 19 such as a CCD and an amplification circuit 20 by a zoom quantity conversion means 21. In other words, when the camera expands or reduces a subject by the zoom quantity accommodation means 18 and detects image of that subject, the amount of zoom which shows the degree of the expansion or the reduction is outputted as a zoom quantity gradation signal from the zoom quantity conversion circuit 21.

This zoom quantity gradation signal is used as the control signal to change the gain of negative feedback of the negative feedback circuit 100. In other words, when the camera zooms up an image, the gain of negative feedback of the negative feedback circuit 100 is increased according to the zoom quantity gradation signal outputted from the zoom quantity conversion circuit 21, and the directivity beam width of the optical microphone element 50 is made narrow to reduce the influence of the surroundings, and to pick out voice from the subject. When the camera zooms down an image, the gain of negative feedback is decreased or the actuation of the negative feedback circuit is made to stop so that the microphone have a single directivity and collect sound including surrounding voice.

In the embodiment shown in Figure 1, although the amount of zooming is obtained based on picture signal from the image capture element 19, other methods for detecting the amount of zoom are also applicable. In other words, it is possible to detect the amount of zoom by directly detecting a mechanical gradation of the zoom quantity accommodation means 18, and converting it to an electric signal as a zoom quantity gradation signal, and using it as a control signal of the negative feedback circuit 100. Although an optical microphone element 50 shown in Figure 4 may also be used as well as device 50 shown in Figure 3, it is preferable to use the structure shown in figure 4.

As explained above, in this invention, the optical microphone that may vary the directional characteristics to a sound wave is used, the directivity of the microphone is changed by changing the gain of negative feedback of the negative feedback circuit according to the amount of zooming to the subject of the video camera so that it may change aural recording conditions corresponding to the scaling of the image. Therefore, the voice is recorded as if it was raised in the neighborhood corresponding to the expansion of image, and if it was raised in the distance toward the reduction image, and in other words image and voice can be recorded in the state that is close to the nature.

## Claims

1. A video camera with a microphone comprising a microphone that may control directional characteristics to focus on the subject synchronizing to the focusing on the subject of the video camera,
wherein the microphone is an optical microphone comprising:
a diaphragm which oscillates by the sound pressure;
a light source which irradiates a light beam in the above diaphragm;
a photodetector which receives a reflection light of the light beam irradiated on the above diaphragm and outputs the signal which copes with the oscillation of the above diaphragm;
a light source drive circuit that drives to supply predetermined electric current to the light source; and
a negative feedback circuit that supplies a part of the signal outputted from the photodetector to the light source drive circuit as a negative feedback signal; and
wherein the directional characteristics of the optical microphone is controlled by changing the volume of the negative feedback signal by the zooming signal which shows the amount of zooming of the video camera to the subject.

2. The video camera with a microphone according to claim 1,
wherein the zooming signal is a zoom quantity signal which shows a quantity of change in zooming of the varifocal lens of the video camera.
